(19) Europäisches Patentamt
European Patent Office
Office européen des brevets

(11) Numéro de publication: **0 057 669**
**B1**

(12) **FASCICULE DE BREVET EUROPEEN**

(45) Date de publication du fascicule du brevet: **03.06.87**

(51) Int. Cl.$^4$: **H 01 G 9/20**, H 01 M 14/00, C 25 B 1/00

(21) Numéro de dépôt: **82810037.0**

(22) Date de dépôt: **28.01.82**

# (54) Produit destiné à être utilisé comme photocatalyseur et utilisation de ce produit.

(30) Priorité: **02.02.81 CH 667/81**

(43) Date de publication de la demande:
**11.08.82 Bulletin 82/32**

(45) Mention de la délivrance du brevet:
**03.06.87 Bulletin 87/23**

(84) Etats contractants désignés:
**CH DE FR GB IT LI NL**

(56) Documents cités:
**GB-A-2 021 314**

**NATURE, vol. 289, 15 janvier 1981, MacMillan Journals LTD, E. BORGARELLO et al.: "Photochemical cleavage of water by photocatalysis", pages 158-160**

**BERICHTE DER BUNSENGESELLSCHAFT FÜR PHYSIKALISCHE CHEMIE, vol. 84, 1980, Verlag Chemie, Weinheim (DE), M. GRÄTZEL: "Photochemical methods for the conversion of light into chemical energy", pages 981-990**

(73) Titulaire: **Graetzel, Michael**
**2, Chemin Pontfilet**
**CH-1093 La Conversion (CH)**

(72) Inventeur: **Graetzel, Michael**
**2, chemin Pontfilet**
**CH-1093 La Conversion (CH)**
Inventeur: **Kalyanasundaram, Kuppuswamy**
**20, rte de Praz-Véguey**
**CH-1022 Chavannes (CH)**
Inventeur: **Duonghong, Dung**
**85, rte de Genève**
**CH-1004 Lausanne (CH)**
Inventeur: **Neumann-Spallart, Michael**
**Avenue d'Ouchy**
**CH-1013 Lausanne (CH)**
Inventeur: **Borgarello, Enrico**
**7, rue du Château**
**CH-1026 Echandens (CH)**

(74) Mandataire: **Kirker, Gaylord Emile et al**
**c/o KIRKER & Cie S.A. 14, Rue du Mont-Blanc**
**Case postale 872**
**CH-1211 Genève 1 (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 057 669 B1

(56) Documents cités:

**EXTENDED ABSTRACTS, vol. 81-2, octobre 1981, Pennington, New Jersey (US), W. GISSLER et al.: "The effect of Ru02 overlayers in illuminated CdS electrodes", pages 1336-1337**

**HELVETICA CHIMICA ACTA, vol. 64, no. 35, Fasc. 1, 4 février 1981, Schweizerische Chemische Gesellschaft, Basel (CH), K. KALYANASUNDARAM et al.: "Visible light induced water cleavage in CdS dispersions loaded with Pt and Ru02, hole scavenging by Ru02", pages 362-365**

**Description**

La présente invention a pour objets un produit destiné à être utilisé comme photocatalyseur et l'utilisation de ce produit pour la production d'un courant électrique et/ou d'une substance transformable chimiquement avec dégagement d'énergie, l'utilisation impliquant l'exposition du produit à un rayonnement électromagnétique.

L'invention a plus particulièrement pour objet un produit utilisable comme photocatalyseur, comprenant une matière semiconductrice sous forme de particules distinctes ou sous forme d'une couche incorporée à une électrode, ladite matière semiconductrice étant susceptible à la photocorrosion et la surface de la matière semiconductrice destinée à être illuminée étant recouverte d'une couche transparente. Un tel produit est connu du document GB—A—2 021 314. Le produit selon l'invention est remarquable en ce que ladite couche transparente est composée d'oxyde de ruthénium $RuO_2$, d'oxyde d'iridium $IrO_2$, ou d'un mélange d'oxyde de ruthénium $RuO_2$ et d'oxyde d'iridium $IrO_2$, qui s'oppose à la photocorrosion de la matière semiconductrice.

L'invention a également pour objet l'utilisation du produit ci-dessus défini pour la production d'un courant électrique et/ou d'une substance transformable chimiquement avec dégagement d'énergie, l'utilisation impliquant l'exposition du produit à un rayonnement électromagnétique.

La conversion de la lumière en énergie électriques ou chimique dans des dispositifs photoélectro-chimiques munis d'électrodes en matière semiconductrice a récemment suscité de nombreux travaux. Les matières dont les atomes actifs ont une mince bande interdite, ou bande séparant la bande de valence de la bande de conduction, ont attiré l'attention en raison de leur aptitude intrinsèque à convertir la lumière solaire visible. Cependant, un problème sérieux associé à l'emploi de ces matières réside dans leur susceptibilité à la photocorrosion. Par exemple, dans le cas du sulfure de cadmium et du phosphure de gallium, qui sont des semiconducteurs de type n, les trous ($h^+$) produits dans la bande de valence sous illumination migrent vers la surface où la photocorrosion se produit conformément aux équations:

$$(1) \quad CdS + 2h^+ \longrightarrow Cd^{2+} + S$$

$$(2) \quad 3H_2O + GaP + 9h^+ \longrightarrow Ga^{3+} + PO_3 + 6H^+$$

Ce processus peut être empêché par la présence d'agents réducteurs appropriés, tels que les ions ferrocyanure, les ions sulfure, les ions sulfite ou l'hydroquinone, qui captent les trous à l'interface semiconducteur/électrolyte avant que la dissolution du réseau puisse se produire. Cependant, le transfert du trou au travers de l'interface nécessite une grande force motrice qui consomme une fraction notable de l'énergie lumineuse absorbée.

La présente invention est fondée sur la découverte qu'un dépôt d'oxyde de ruthénium, d'oxyde d'iridium ou d'un mélange d'oxyde de ruthénium et d'oxyde d'iridium sur la surface de matières semiconductrices susceptible à la photocorrosion inhibe cette dernière.

L'inhibition de la photocorrosion résulte probablement d'une activation de l'oxydation de l'eau suivant l'équation:

$$(3) \quad 4h^+(CdS) + 2H_2O \xrightarrow{(RuO_2)} O_2 + 4H^+$$

Le produit selon l'invention, destiné à être utilisé comme photocatalyseur sous forme de particules distinctes ou sous forme d'une couche incorporée à une électrode, ladite matière semiconductrice étant susceptible à la photocorrosion, et la surface de la matière semiconductrice destinée à être illuminée étant recouverte d'une couche transparente, est caractérisé en ce que ladite couche est composée d'oxyde de ruthénium $RuO_2$, d'oxyde d'iridium $IrO_2$, ou d'un mélange d'oxyde de ruthénium $RuO_2$ et d'oxyde d'iridium $IrO_2$ qui s'oppose à la photocorrosion de la matière semiconductrice.

Il a dejà été proposé de déposer de l'oxyde de ruthénium en association avec du platine sur des particules de bioxyde de titane (voir notamment s Borgarello et al., Nature, *289*, 158c (1981)). Toutefois, le bioxyde de titane est un semiconducteur non sujet à la photocorrosion, et la fonction du dépôt d'oxyde de ruthénium sur le bioxyde de titane est uniquement d'accroître le rendement de la production d'hydrogène et d'oxygène par photolyse de l'eau.

La figure unique du dessin annexé représente schématiquement, à titre d'exemple, une coupe transversale d'une cellule de photolyse de l'eau munie d'une anode selon une forme d'exécution du produit selon l'invention et destinée à la production d'hydrogène et d'oxygène.

Cette cellule est délimitée par une cuve 1 divisée en deux compartiments par une cloison médiane 2. Cette cloison médiane ne descend pas jusqu'au fond de la cuve mais se prolonge vers le bas par une membrane perméable 3 qui pourrait être supprimée. Le compartiment de droite sur la figure renferme une anode 4 en forme de plaque, qui comprend un support conducteur 5, en carbone, en aluminium, en titane ou en toute autre matière résistant à la corrosion dans le milieu liquide de la cellule. Sur sa face tournée vers la paroi de la cellule, le support 5 est recouvert d'un couche 6 d'une matière semiconductrice polycristalline sujette à la photocorrosion, de préférence une matière semiconductrice qui est opérante comme photocatalyseur en lumière visible, par exemple du sulfure de cadmium CdS, du séléniure de cadmium CdSe, du phosphure de gallium GaP ou du silicium.

La surface exposée de la couche de matière semiconductrice 6 est elle-même recouverte d'une couche transparente 7 d'oxyde de

ruthénium $RuO_2$, d'oxyde d'iridium, $IrO_2$ ou d'un mélange d'oxyde de ruthénium $RuO_2$ et d'oxyde d'iridium $IrO_2$ en proportion molaire 3:1. La paroi latérale 8 de la cuve 1 qui fait face à l'anode est elle-même en une matière transparente ou translucide telle que du verre afin que le rayonnement solaire, symbolisé par des flèches parallèles, puisse illuminer la couche semiconductrice 6 à travers la couche transparente 7.

L'épaisseur des couches 6 et 7 est exagérée pour la clarté du dessin.

Le support conducteur 5 de l'anode 4 est relié électriquement, par un conducteur 9, à travers une résistance 10 (facultative), à une cathode 11, également en forme de plaque et dont la surface est faite d'une matière à faible surtension de réduction de l'hydrogène, par exemple en platine ou en nickel.

La cuve 1 est remplie d'une solution aqueuse tamponnée en pH acide, de manière connue. Sous irradiation de l'anode 4, on observe le dégagement d'oxygène à partir du compartiment anodique et d'hydrogène à partir du compartiment cathodique de la cellule, en même temps qu'un courant électrique de l'ordre de 5 mA/cm$^2$ de surface d'anode illuminée circule dans le conducteur 9. La direction de circulation des électrons $e^-$ est représentée par une flèche. Les lettres X et Y désignent respectivement le corps qui va être réduit et le produit de la réduction.

Comme il est bien connu, l'oxygène de l'eau est oxydé sur la matière semiconductrice ·4 de l'anode et l'hydrogène de l'eau est réduit sur la surface de la cathode. Il est évident qu'une cellule similaire pourrait être utilisée pour la photolyse de composés ionisables autres que l'eau, par exemple l'acide bromhydrique, les bromures, des sels de zinc, de plomb, etc. Dans tous les cas, le cation est réduit et l'anion est oxydé. Ainsi, dans le cas d'une solution de KBr 0,1 M, on peut observer lors de l'irradiation un courant de l'ordre de 10 mA/cm$^2$ de surface d'anode illuminée avec dégagement de brome sur la matière semiconductrice de l'anode et dégagement d'hydrogène sur la cathode. Lorsque la solution contient un carbonate, l'anhydride carbonique peut être réduit sur la cathode en acide formique et celui-ci peut à son tour être réduit en méthanol. La présence de la couche 7 d'oxyde de ruthénium, d'oxyde d'iridium ou d'un mélange d'oxyde de ruthénium et d'oxyde d'iridium inhibe la photocorrosion dans tous ces milieux et élargit le choix possible des couples rédox. La matière de la cathode est choisie dans chaque cas de manière à présenter la surtension minimum pour la réduction.

Dans une variante non représentée, qui est destinée uniquement à la production d'énergie électrique, la cloison médiane 2 et la membrane perméable 3 sont supprimées afin de faciliter la diffusion des produits d'oxydo-réduction. L'énergie électrique est utilisée dans la résistance 10, qui peut être remplacée par une autre charge utile ou par un accumulateur.

Le produit selon l'invention peut aussi être utilisé sous forme de particules en suspension dans une solution aqueuse telle que l'une des solutions citées plus haut. Dans ce cas, la surface de chaque particule est divisée en un site anodique et un site cathodique. Le site anodique porte une couche d'oxyde de ruthénium, l'oxyde d'iridium ou d'un mélange d'oxyde de ruthénium et d'oxyde d'iridium et le site cathodique est de préférence recouvert d'une couche de platine ou d'une autre matière présentant une faible surtension pour la réduction du cation. Au cours de l'irradiation d'une telle suspension, les produits oxydés et réduits, par exemple l'oxygène et l'hydrogène, se mélangent et ils peuvent, si désiré, être séparés ultérieurement de manière connue.

Au lieu de particules en suspension, ou pourrait immerger dans la solution aqueuse une plaque semblable à l'anode de la cellule représentée, mais dont la face opposée à celle portant la couche de matière semiconductrice serait revêtue de platine, de nickel ou de toute matière présentant une faible tension de réduction pour le cation considéré. Dans ce cas, la plaque fonctionnerait à la fois comme anode et comme cathode et, par illumination, produirait un mélange de produits oxydés et réduits, par exemple de brome et d'hydrogène.

Les exemples qui suivent illustrent la préparation et l'utilisation du photocatalyseur selon l'invention.

Exemple 1

Electrode à sulfure de cadmium polycristallin

On a mélangé 200 mg de CdS à 99.9% avec 200 µl d'une solution à 5% V/V de "Triton X-100" ("Triton" est une marque de fabrique de Rohm and Haas désignant des agents surfactifs) dans de l'eau contenant 20 mg de $ZnCl_2$. On a obtenu une suspension dont on a enduit une surface nettoyée d'une plaque de Ti. La plaque enduite a été chauffée à 620°C pendant 10 min. dans un courant d'argon. Après refroidissement dans l'argon jusqu'à la température ordinaire, on a déterminé les courbes intensité-potentiel de ces électrodes. La surface revêtue de CdS a été mise en contact avec une solution aqueuse contenant un tampon d'acétate 0,1 M à pH 7 et a été illuminée au moyen d'une lampe tungstène-halogène de 250 W.

Un photocourant anodique s'est amorcé à un potentiel plus positif que —950 mV mesuré contre une électrode Ag/AgCl. L'intensité pour une tension de +0,1 V (Ag/AgCl) est de plus de 10 mA/cm$^2$ de surface d'électrode. Cependant, ce courant décroît rapidement jusqu'à 0 par suite de la photocorrosion de la surface de CdS. La durée de vie de l'électrode est au maximum de 5 min. dans ces conditions.

On empêche cette photocorrosion en déposant une couche ultrafine de $RuO_2$ sur la surface de CdS. Les deux méthodes suivantes ont été employées:

a) On a immergé l'électrode de CdS dans une solution de $RuO_4$ dans de l'eau (0,5 mg/ml). Du

$RuO_2$ se dépose spontanément à la lumière du jour selon l'équation:

$$RuO_4 \rightarrow RuO_2 + O_2$$

Après 2 min. d'immersion dans le solution, on sèche l'électrode à l'air, puis on recuit l'électrode à 100—200°C pendant environ 15 min.

b) On immerge l'électrode de CdS dans une solution 0,02 M de $RuCl_3$ dans de l'eau. Les ions $Ru^{3+}$ absorbés sur la surface sont ensuite oxydés à l'air à 100°C pendant 15 min. et produisent du $RuO_2$ selon l'équation:

$$Ru^{3+} + O_2 \rightarrow RuO_2$$

On répète trois fois les opérations d'immersion et d'oxydation.

Une électrode préparée selon a) ou b) n'est plus affectée par la photocorrosion selon le processus

$$2h^+ + CdS \rightarrow Cd^{2+} + S$$

A la place, de l'oxygène se dégage selon:

$$4h^+ + 2H_2O \rightarrow O_2 + 4H^+$$

Dans cet exemple, on peut remplacer le sulfure de cadmium par le séléniure de cadmium (qui donne un potentiel plus positif que −700 mV), par le phosphore de gallium ou par le silicium. On peut également remplacer $RuCl_3$ par $IrCl_3$ dans la méthode b) ci-dessus pour former une couche de $IrO_2$.

Exemple 2
Suspension de sulfure de cadmium

On disperse 25 de CdS à 99,999% dans 25 ml d'eau à l'aide de vibrations ultrasoniques. On ajoute une solution aqueuse de $RuO_4$ et on agite le mélange pendant environ 30 min. à la lumière du jour. Le $RuO_4$ se décompse spontanément en $RuO_2$ ultrafin comme dans l'exemple 1 et se dépose sur les particules de CdS. La concentration finale de $RuO_2$ est de 8 mg/l. On dépose du platine sur une partie de la surface des particules par photoplatinisation de la manière suivante:

A une solution contenant 25 mg de CdS revêtu de $RuO_2$, on ajoute 3 mg de $H_2PtCl_6$ et 0,5 ml d'une solution de formaldéhyde 0,5 M dans un mélange méthanol/eau 2:3, de façon à obtenir une concentration de formaldéhyde de 0,01 M. Après désaération au moyen d'azote, on illumine la dispersion pendant 30 min. avec une lampe à xénon de 450 W à travers un filtre de coupure à 320 nm. Cette durée suffit pour la réduction quantitative des ions Pt par les électrons de la bande de conduction. (Les trous créés dans la bande de valence sont utilisés pour oxyder le formaldéhyde). Ensuite, on chasse l'excès de formaldéhyde, le méthanol et l'eau sous vide à 30°C. La poudre séchée contient environ 40 mg de Pt et 8 mg de $RuO_2$ par g de CdS.

On a illuminé des échantillons de 25 ml de solutions de pH 6,2 contenant 25 mg de catalyseur à la lumière d'une lampe à xénon de 450 W à travers un filtre de coupure à 400 nm et une cellule d'eau de 15 cm d'épaisseur afin d'éliminer les rayons IR et UV et, par analyse des gaz dégagés, on a constaté une production d'environ 0,014 ml de $H_2$/h après une brève période d'induction. De l'oxygène se forme également en proportion stoechiométrique. Des essais comparatifs effectués dans les mêmes conditions mais avec du CdS dépourvu de $RuO_2$ ont montré une photodégradation rapide du CdS avec formation de soufre élémentaire. D'autres essais ont montré que le rendement de la photolyse augmentait de 50% lorsqu'on doublait la proportion de $RuO_2$ sur les particules de CdS.

Exemple 3
Dispersion colloïdale de CdS

Un sol de CdS a été préparé de la manière suivante: on dissout 100 mg d'un copolymère anhydride maléique-styrène 50/50 (fourni par TNO, Utrecht, Pays-Bas) dans 100 ml d'eau de pH 10 (ajusté au moyen de NaOH 1 N) sous agitation à 50°C pendant plusieurs heures. Après dissolution complète, on ajoute 0,15 ml d'une solution à 10% (pds/vol) de sulfure d'ammonium. Dans la solution ainsi obtenue, on injecte très lentement (au moyen d'une microseringue) 10 ml d'une solution de $CdSO_4$ à 2 g/l. L'apparition d'une couleur jaune intense sous agitation pendant 1 h indique la formation du sol de CdS. Ensuite, on ajuste le pH du sol à 3 au moyen de HCl et on chasse l'excès de sulfure sous forme de $H_2S$ en faisant barboter de l'azode dans le sol jusqu'au lendemain. La concentration finale est de 110 mg CdS/1, ce qui correspond à $8{,}4 \times 10^{-4}$M.

Le dépôt de $RuO_2$ est effectué par décomposition spontanée de $RuO_4$ comme dans les exemples prédédents: on injecte 0,5 ml d'une solution aqueuse de $RuO_4$ à 0,5 mg/ml dans 20 ml du sol de CdS en agitant pendant 30 min., ce qui produit un dépôt ultrafin de $RuO_2$ sur les particules de CdS. Ensuite, on ajoute directement au sol 3 mg de $H_2PtCl_2$ et 1 ml d'une solution aqueuse de formaldéhyde à 40%. Après désaération, on provoque le dépôt de Pt sur une partie de la surface des particules de CdS par photoplatinisation comme dans l'exemple précédent, puis on chasse l'excès de formaldéhyde sous vide. Les concentrations finales sont d'environ 40 mg de Pt, 8 mg de $RuO_2$ et 110 mg de CdS par 1 de sol.

On place 25 ml de cel sol dans un récipient de verre "pyrex" muni de fenêtres d'entrée et de sortie optiquement planes et on l'illumine à la température de 20°C au moyen d'une lampe à xénon Osram XBO de 450 W. Par analyse chromatographique des gaz dégagés, on constate une production d'hydrogène d'environ 50 µl/h. En répétant l'expérience à la température de 75°C, on observe une production d'hydrogène de 5 ml/h, soit cent fois plus. Dans les deux expériences, l'oxygène se forme en proportion stoechiométrique.

Exemple 4

Conversion d'énergie lumineuse en énergie électrique

Une électrode de CdS couverte par une couche fine de $RuO_2$ préparée selon la méthode a) ou b) de l'exemple 1 est immergée dans une solution contenant KBr à 0,1 M concentration. Cette solution se trouve dans une cellule fermée dont les parois sont fabriquées en verre de Pyrex. L'oxygène a été enlevé préalablement par dégazage avec l'azote. Une deuxième électrode en platine se trouve également dans la solution aqueuse. Quand l'électrode en CdS est irradiée par une lampe à halogène (250 Watt), on constate l'apparition d'un photovoltage entre les deux électrodes d'environ 900 mV. La fermeture du circuit produit un courant électrique d'environ 7 mA à travers une résistance de 100 Ω. Ce courant correspond à l'oxydation du brome à la photoanode (électrode CdS/$RuO_2$).

$$Br^- \rightarrow 1/2Br_2 + e^- \qquad (CdS)$$

et la réduction du brome à la cathode

$$1/2Br_2 + e^- \rightarrow Br^-$$

Il n'entraîne donc aucun changement chimique net en solution. L'énergie de la lumière est directement transformée en énergie électrique.

Exemple 5

Photolyse de l'eau dans une cellule à deux compartiments par la lumière visible

On utilise une cellule à deux compartiments telle que celle représentée au dessin. Dans cette cellule, on place une électrode de CdS munie d'une mince couche de $RuO_2$ formée selon la méthode a) de l'exemple 1 et on place également une électrode de Pt reliée par un conducteur à la photoanode de CdS. On introduit dans les deux compartiments de la cellule une solution à 0,1 M d'acide acétique et 0,1 M d'acétate de sodium et ayant un pH de 4,7. Après avoir dégazé à l'azote, on irradie la photoanode au moyen d'une lampe à halogène de 250 W. La lumière est débarrassée des rayons UV par un filtre coupant les radiations de longueur d'onde dépassant 450 nm et des rayons IR par un filtre d'eau. On observe le passage d'un courant de 400 µA dans le conducteur reliant la photoanode à la cathode et on observe également le dégagement de bulles de gaz sur les deux électrodes. Par analyse chromatographique gazeuse, on détermine que le gaz dégagé à l'anode est l'oxygène et le gaz dégagé à la cathode est l'hydrogène et que ces deux gaz se forment en rapport stoechiométrique. De plus, on constate que la quantité des gaz formés est moléculairement équivalente à la quantité d'électricité ayant passé entre les électrodes selon la loi de Faraday. Pendant 6 h de fonctionnement, l'intensité du courant ne varie pas, ce qui démontre la stabilité de l'électrode de CdS.

**Revendications**

1. Produit utilisable comme photocatalyseur, comprenant une matière semiconductrice sous forme de particules distinctes ou sous forme d'une couche incorporée à une électrode, ladite matière semiconductrice étant susceptible à la photocorrosion, la surface de la matière semiconductrice (6) destinée à être illuminée étant recouverte d'une couche transparente (7), caractérisé en ce que ladite couche est composée d'oxyde de ruthénium $RuO_2$, d'oxyde d'iridium $IrO_2$, ou d'un mélange d'oxyde de ruthénium $RuO_2$ et d'oxyde d'iridium $IrO_2$, qui s'oppose à la photocorrosion de la matière semiconductrice.

2. Produit selon la revendication 1, caractérisé en ce que la matière semiconductrice (6) est une matière choisie parmi le sulfure de cadmium CdS, le séléniure de cadmium CdSe, le phosphure de gallium GaP et le silicium.

3. Produit selon la revendication 2, caractérisé en ce que la matière semiconductrice (6) est opérante comme photocatalyseur en lumière visible.

4. Produit selon l'une des revendications précédentes, la matiere semiconductrice étant sous forme de particules dont la surface est divisée en un site anodique et un site cathodique, caractérisé en ce que la surface de matière semi-conductrice du site anodique est recouverte d'une couche transparente (7) telle que définie à la revendication 1 et en ce que la surface de matière semi-conductrice (6) du site cathodique, dépourvue de ladite couche transparente (7), est recouverte d'une couche d'une matière ayant une faible surtension pour la réduction d'un cation, de l'eau ou de $CO_2$, par exemple une couche de platine ou de nickel.

5. Produit selon l'une des revendications précédentes 1 à 3, la matière semiconductrice étant sous forme d'une couche incorporée à une électrode (4) caractérisé en ce que la matière semiconductrice (6) est déposée, à l'état polycristallin, sur un support conducteur (5) sous forme d'une couche ayant une surface en contact avec le support conducteur (5) et une surface opposée en contact avec ladite couche transparente (7).

6. Produit selon la revendication 5, caractérisé en ce qu'une surface du support conducteur (5) qui n'est pas en contact avec la matière semiconductrice (6) est recouverte d'une couche d'une matière ayant une faible surtension pour la réduction d'un cation, ou de l'eau ou de $CO_2$, par exemple une couche de platine ou de nickel.

7. Utilisation du produit selon l'une des revendications 1 à 6 pour la production d'un courant électrique et/ou d'une substance transformable chimiquement avec dégagement d'énergie, l'utilisation impliquant l'exposition du produit à un rayonnement électromagnétique.

8. Utilisation selon la revendication 7, caractérisée en ce qu'on produit un combustible.

9. Utilisation selon la revendication 8, caractérisée en ce qu'on produit de l'hydrogène par

oxydo-réduction de l'eau ou d'un hydracide halogéné, par exemple l'acide bromhydrique.

10. Utilisation selon la revendication 8, caractérisée en ce qu'on produit du méthanol par oxydo-réduction de l'anhydride carbonique.

11. Utilisation selon la revendication 7, caractérisée en ce qu'on produit du zinc ou du plomb par oxydo-réduction d'un composé de zinc divalent ou d'un composé de plomb divalent, respectivement.

12. Utilisation selon la revendication, 7 ou 8, caractérisée en ce que le produit est sous forme d'une couche incorporée à une électrode et qu'on l'utilise comme anode électriquement reliée à une cathode ayant une surface à faible surtension pour la réduction d'un cation, de l'eau ou de $Co_2$, les deux électrodes étant immergées dans une solution aqueuse conductrice.

13. Utilisation selon la revendication 12, caractérisée en ce que les électrodes sont disposées de part- et d'autre d'une cloison pour séparer le composant réduit, par exemple l'hydrogène, du composant oxydé, par exemple l'oxygène.

14. Utilisation selon la revendication 12, caractérisée en ce que les deux électrodes sont électriquement reliées à travers une charge utile et qu'on laisse le composant réduit, par exemple l'hydrogène, s'oxyder à l'anode et le composant oxydé, par exemple l'oxygène, se réduire à la cathode.

15. Utilisation selon l'une des revendications 7 à 9, caractérisée en ce qu'on utilise le produit sous forme de particules, qu'on recueille un mélange du composant oxydé, par exemple l'oxygène, et du composant réduit, par exemple l'hydrogène, et qu'on sépare subséquemment les deux composant l'un de l'autre.

16. Utilisation selon l'une des revendications 7 à 15, caractérisée en ce qu'on opère à chaud, de préférence à une température d'environ 75°C.

17. Utilisation selon la revendication 16, caractérisée en ce que la température désirée est obtenue par chauffage du substrat au moyen du rayonnement solaire.

**Patentansprüche**

1. Als Photokatalysator verwendbares Produkt, welches—in der Gestalt getrennter Partikeln oder einer in einer Elektrode verwendeten Schichthalbleitenden Stoff aufweist, wobei der halbleitende Stoff am Licht korrodieren kann, und wobei die für die Beleuchtung bestimmte Oberfläche des halbleitenden Stoffes (6) mit einer durchsichtigen Schicht (7) bedeckt ist, dadurch gekennzeichnet, dass die genannte Schicht aus Rutheniumoxyd $RuO_2$, aus Iridiumoxyd $IrO_2$ oder aus einer Mischung von Rutheniumoxyd $RuO_2$ und Iridiumoxyd $IrO_2$ besteht, wobei diese durchsichtige Schicht sich der Lichtkorrosion des halbleitenden Stoffes widersetzt.

2. Produkt gemäss Anspruch 1, dadurch gekennzeichnet, dass der halbleitende Stoff (6) ein unter Cadmiumsulfid CdS, Cadmiumselenid CdSe, Galliumphosphid GaP und Silizium ausgewählter Stoff ist.

3. Produkt gemäss Anspruch 2, dadurch gekennzeichnet, dass der halbleitende Stoff (6) als Photokatalysator bei sichtbarem Licht wirksam ist.

4. Produkt gemäss einem der vorangehenden Ansprüche, wobei der halbleitende Stoff sich in der Gestalt von Partikeln befindet, deren Oberfläche in eine anodische Teilfläche und in eine kathodische Teilfläche aufgeteilt ist, dadurch gekennzeichent, dass die Oberfläche des halbleitenden Stoffes der anodischen Teilfläche von einer durchsichtigen Schicht (7), wie sie im Anspruch 1 definiert ist, überzogen ist, und dass die Oberfläche des halbleitenden Stoffes der kathodischen Teilfläche, frei von dieser durchsichtigen Schicht (7), von einer Schicht aus einem eine schwache Überspannung zur Reduktion eines Kations, oder des Wassers oder des $CO_2$ aufweisenden Stoff bedeckt ist, zum Beispiel eine Platin- oder Nickelschicht.

5. Produkt gemäss einem der Ansprüche 1 bis 3, wobei sich der halbleitende Stoff in der Gestalt einer in eine Elektrode (4) eingebetteten Schicht befindet, dadurch gekennzeichnet, dass der halbleitende Stoff (6) in polykristalliner Form auf einem leitenden Träger (5) aufgetragen ist in der Gestalt einer Schicht mit einer Fläche im Kontakt mit dem leitenden Träger (5) und einer entgegengesetzten Fläche im Kontakt mit der genannten durchsichtigen Schicht (7).

6. Produkt gemäss Anspruch 5, dadurch gekennzeichnet, dass eine Fläche des leitenden Trägers (5), welche nicht im Kontakt mit dem halbleitenden Stoff (6) steht, von einer Schicht aus einem eine schwache Überspannung zur Reduktion eines Kations, oder des Wassers oder des $CO_2$ aufweisenden Stoff bedeckt ist, zum Beispiel eine Platin- oder Nickelschicht.

7. Verwendung des Produktes gemäss einem der Ansprüche 1 bis 6 zur Erzeugung eines elektrischen Stromes und/oder einer unter Energieabgabe chemisch umwandelbaren Substanz, wobei die Verwendung die Aussetzung des Produktes einer elektromagnetischen Strahlung einschliesst.

8. Verwendung gemäss Anspruch 7, dadurch gekennzeichnet, dass ein Brennstoff erzeugt wird.

9. Verwendung gemäss Anspruch 8, dadurch gekennzeichnet, dass Wasserstoff durch Oxydo-Reduktion des Wassers oder einer Halogenwasserstoffsäure, zum Beispiel Bromwasserstoff, erzeugt wird.

10. Verwendung gemäss Anspruch 8, dadurch gekennzeichnet, dass durch Oxydo-Reduktion von Kohlendioxyd Methanol erzeugt wird.

11. Verwendung gemäss Anspruch 7, dadurch gekennzeichnet, dass man durch Oxydo-Reduktion einer zweiwertigen Zinkverbindung oder einer zweiwertigen Bleiverbindung Zink respektiv Blei produziert.

12. Verwendung gemäss Anspruch 7 oder 8, dadurch gekennzeichnet, das das Produkt die Gestalt einer in einer Elektrode verwendeten

Schicht aufweist, und dass sie als eine an eine Kathode elektrisch verbundene Anode mit schwacher Ueberspannung zur Reduktion eines Kations, von Wasser oder von $CO_2$ verwendet wird, wobei beide Elektroden in einer leitenden wässrigen Lösung eingetaucht sind.

13. Verwendung gemäss Anspruch 12, dadurch gekennzeichnet, dass die Elektroden auf entgegengesetzten Seiten einer Trenn-membrane angeordnet sind, um die reduzierte Komponente, zum Beispiel Wasserstoff, von der oxydierten Komponente, zum Beispiel Sauerstoff, zu trennen.

14. Verwendung gemäss Anspruch 12, dadurch gekennzeichnet, dass die beiden Elektroden über eine Nutzlast elektrisch verbunden sind, und dass man die reduzierte Komponente, zum Beispiel den Wasserstoff, sich an der Anode oxydieren lässt und die oxydierte Komponente, zum Beispiel den Sauerstoff, sich an der Kathode reduzieren lässt.

15. Verwendung gemäss einem der Ansprüche 7 bis 9, dadurch gekennzeichnet dass man das Produkt in der Gestalt von Partikeln verwendet, dass man eine Mischung der oxydierten Komponente, zum Beispiel den Sauerstoff, und der reduzierten Komponente, zum Beispiel den Wasserstoff, auffängt, und dass man anschliessend die beiden Komponenten von einander trennt.

16. Verwendung gemäss einem der Ansprüche 7 bis 15, dadurch gekennzeichnet, dass bei erhöhter Temperatur vorgegangen wird, vorzugsweise bei einer Temperatur von ca. 75°C.

17. Verwendung gemäss Anspruch 16, dadurch gekennzeichnet, dass die gewünschte Temperatur durch Erwärmung des Substrates mittels Sonnenstrahlung erreicht wird.

**Claims**

1. A product which can be used as a photocatalyst, comprising a semiconducting material in the form of separate particles or in the form of a layer incorporated in an electrode, the said semiconducting material being susceptible to photocorrosion, that surface of the semiconducting material (6) which is to be illuminated being covered with a transparent layer (7), characterized in that the said layer is composed of ruthenium oxide, $RuO_2$, iridium oxide, $IrO_2$, or a mixture of ruthenium oxide, $RuO_2$, and iridium oxide, $IrO_2$, which opposes the photocorrosion of the semiconducting material.

2. The product according to Claim 1, characterized in that the semiconducting material (6) is a material selected from the group comprising cadmium sulphide, CdS, cadmium selenide, CdSe, Gallium phosphide, GaP, and silicon.

3. The product according to Claim 2, characterized in that the semiconducting material (6) behaves as a photocatalyst in visible light.

4. The product according to one of the preceding claims, the semiconducting material being in the form of particles whose surface is divided up into an anodic site and a cathodic site, characterized in that the surface of the semiconducting material at the anodic site is covered with a transparent layer (7) such as defined in Claim 1, and in that the surface of the semiconducting material (6) at the cathodic site, which does not possess the said transparent layer (7), is covered with a layer of a material having a small overvoltage for the reduction of a cation, water or $CO_2$, for example a layer of platinum or nickel.

5. The product according to one of Claims 1 to 3, the semiconducting material being in the form of a layer incorporated in an electrode (4), characterized in that the semiconducting material (6) is deposited in the polycrystalline state on a conducting substrate (5) in the form of a layer having one surface in contact with the conducting substrate (5) and the opposite surface in contact with the said transparent layer (7).

6. The product according to Claim 5, characterized in that the surface of the conducting substrate (5) which is not in contact with the semiconducting material (6) is covered with a layer of a material having a small overvoltage for the reduction of a cation, water or $CO_2$, for example a layer of platinum or nickel.

7. Use of the product according to one of Claims 1 to 6 for the production of an electric current and/or of a substance chemically convertible with the release of energy, the use involving exposure of the product to electromagnetic radiation.

8. Use according to Claim 7, characterized in that a fuel is produced.

9. Use according to Claim 8, characterized in that hydrogen is produced by the oxidation-reduction of water or a hydrohalic acid, for example hydrobromic acid.

10. Use according to Claim 8, characterized in that methanol is produced by the oxidation-reduction of carbon dioxide.

11. Use according to Claim 7, characterized in that zinc or lead is produced by the oxidation-reduction of a divalent zinc compound or a divalent lead compound, respectively.

12. Use according to Claim 7 or 8, characterized in that the product is in the form of a layer incorporated in an electrode, and in that it is used as an anode electrically connected to a cathode having a surface with a small overvoltage for the reduction of a cation, water or $CO_2$, the two electrodes being immersed in a conducting aqueous solution.

13. Use according to Claim 12, characterized in that the electrodes are arranged on either side of a partition for separating the reduced component, for example hydrogen, from the oxidized component, for example oxygen.

14. Use according to Claim 12, characterized in that the two electrodes are electrically connected across a useful load, and in that the reduced component, for example hydrogen, is allowed to oxidize at the anode and the oxidized component, for example oxygen, is allowed to reduce at the cathode.

15. Use according to one of Claims 7 to 9, characterized in that the product is used in the form of particles, in that a mixture of the oxidized component, for example oxygen, and the reduced component, for example hydrogen, is collected and in that the two components are subsequently separated from one another.

16. Use according to one of Claims 7 to 15, characterized in that the process is carried out at high temperature, preferably at a temperature of about 75°C.

17. Use according to Claim 16, characterized in that the desired temperature is obtained by heating the substrate by means of solar radiation.

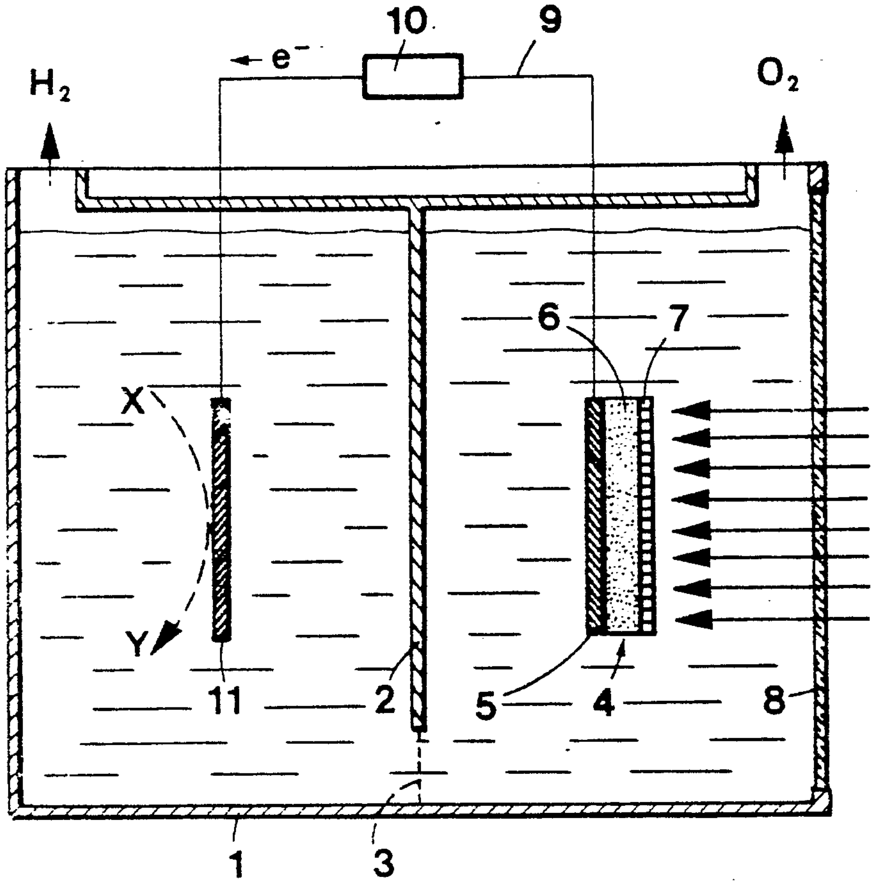
10
9
← e⁻
$H_2$
$O_2$
6
7
X
Y
11
2
5
4
8
1
3